# EUROPEAN PATENT APPLICATION

(11) **EP 4 656 250 A1**
(43) Date of publication of application: **03.12.2025**
(21) Application number: 24382589.0
(22) Date of filing: 31.05.2024
(51) Int. Cl.: A62C 3/02, B64D 1/16

(54) **FIRE FIGHTING DEVICE**

(71) Applicant: Vilaro Torrents, Juan, 08230 Matadepera Barcelona (ES)
(72) Inventor: VILARO TORRENTS, Juan, 08230 MATADEPERA (ES); SEVILLANO PUIG, Marina, 08911 BADALONA (ES)
(74) Representative: Galbaian S.Coop.

(57) **Abstract**

The invention relates to a fire fighting device (1) configured to be transported by a helicopter (2). The device (1) comprises a bucket (3) configured to hold a fluid inside, the bucket (3) comprising a top opening (3a) and a bottom opening (3b), fastening means for suspending the bucket (3) from the helicopter (2), a discharge valve (4) attached to the bottom opening (3b) of the bucket (3) for emptying the fluid from the bucket (3), and an actuator configured to open and close the discharge valve (4). The actuator is a pneumatic cylinder comprising a piston attached to the discharge valve (4) by means of a cord or cable (7), and the fastening means comprise a support (8) comprising a case (9), the case (9) comprising the pneumatic cylinder and a pressurised air chamber for the pneumatic cylinder.

## Description

### TECHNICAL FIELD

The present invention relates to fire fighting devices configured to be transported by a helicopter.

### PRIOR ART

Fire fighting devices are known which comprise a bucket which is suspended from a helicopter by means of fastening means and which carries a fluid which is poured onto fires. The bucket usually comprises a top opening and a bottom opening and the device usually comprises a discharge valve attached to the bottom opening of the bucket to empty the fluid from the bucket. The discharge valve is opened and closed by an actuator.

US2012/0222874A1 and US2010/0018725A1 describe devices of this type comprising a bulky actuator arranged in the bucket over the discharge valve.

US2010/0230121A1 describes a device of this type with an actuator arranged outside the bucket. The actuator comprises a plurality of hydraulic cylinders.

### DISCLOSURE OF THE INVENTION

The object of the invention is to provide a fire fighting device, as defined in the claims.

The device of the invention is configured to be transported by a helicopter and comprises a bucket configured to hold a fluid inside, the bucket comprising a top opening and a bottom opening, fastening means for suspending the bucket from the helicopter, a discharge valve attached to the bottom opening of the bucket for emptying the fluid from the bucket, and an actuator configured to open and close the discharge valve.

The actuator is a pneumatic cylinder comprising a piston attached to the discharge valve by means of a rope or cable, and the fastening means comprise a support comprising a case, the case comprising inside the pneumatic cylinder and a pressurised air chamber for the pneumatic cylinder.

In this way, it is provided a fire fighting device with a simple, compact actuator that has little volume and is housed in a case of a support that is part of the fastening means, making the device easy to stow in the helicopter's cargo basket. Thus, when the helicopter is far from the point of the fire, the device does not need to be transported suspended from the helicopter during the journey, but is transported in the helicopter's cargo basket. This allows the helicopter to travel at a higher speed, to consume less fuel and to avoid the added risk of flying with the empty fire fighting device suspended from the helicopter.

These and other advantages and features of the invention will become apparent in view of the figures and the detailed description of the invention.

### DESCRIPTION OF THE DRAWINGS

Figure 1 shows an embodiment of a fire fighting device according to the invention transported by a helicopter.
Figure 2 shows the embodiment of figure 1.
Figure 3 shows a first perspective view of the support of the embodiment of figure 1.
Figure 4 shows a perspective view of the support of the embodiment of figure 1 in which the side wall of the case has been removed to show the inside of the support.
Figure 5 shows a section view of the support of the embodiment of figure 1 in a first operating position.
Figure 6 shows a section view of the support of the embodiment of figure 1 in a second operating position.
Figure 7 shows a plan view of the support of the embodiment of figure 1 in which the top wall of the case has been removed to show the inside of the support.
Figure 8 shows a second perspective view of the support of the embodiment of figure 1.
Figure 9 shows a second embodiment of the support of the device of the invention.
Figure 10 shows an exploded view of the embodiment of the support of the device of the invention shown in figure 9.
Figure 11 shows a perspective view of the discharge valve of the embodiment of figure 1.

### DETAILED DISCLOSURE OF THE INVENTION

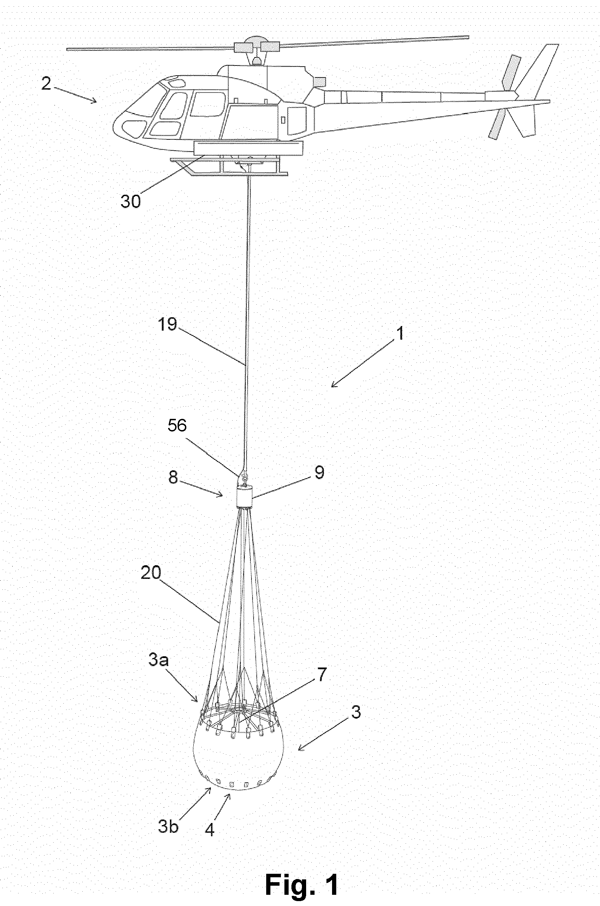

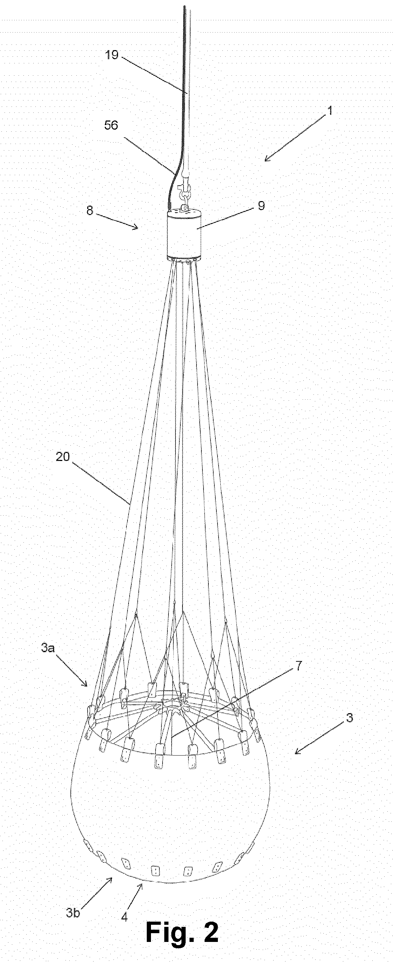

Figures 1 and 2 show an embodiment of the fire fighting device 1 of the invention. As shown in figure 1, the device 1 is configured to be transported by a helicopter 2. The device 1 comprises a bucket 3 configured to hold a fluid inside, the bucket 3 comprising a top opening 3a and a bottom opening 3b. The device 1 also comprises fastening means for suspending the bucket 3 from the helicopter 2, a discharge valve 4 coupled to the bottom opening 3b of the bucket 3 for emptying the fluid from the bucket 3, and an actuator configured to open and close the discharge valve 4.

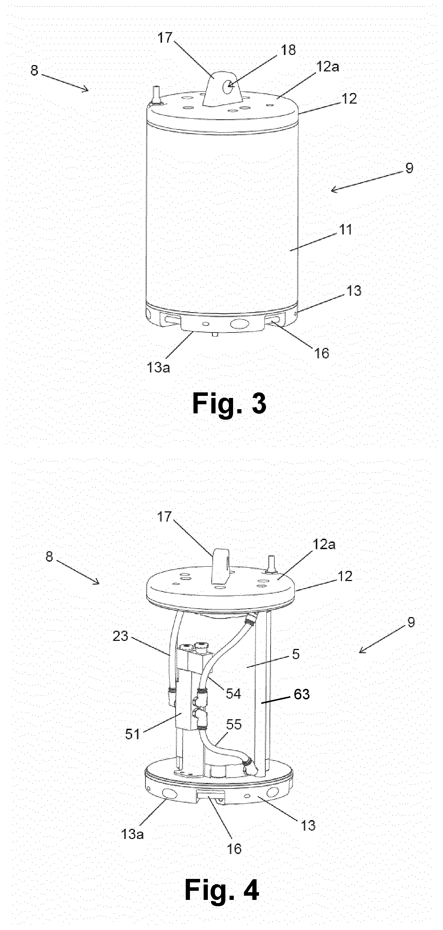

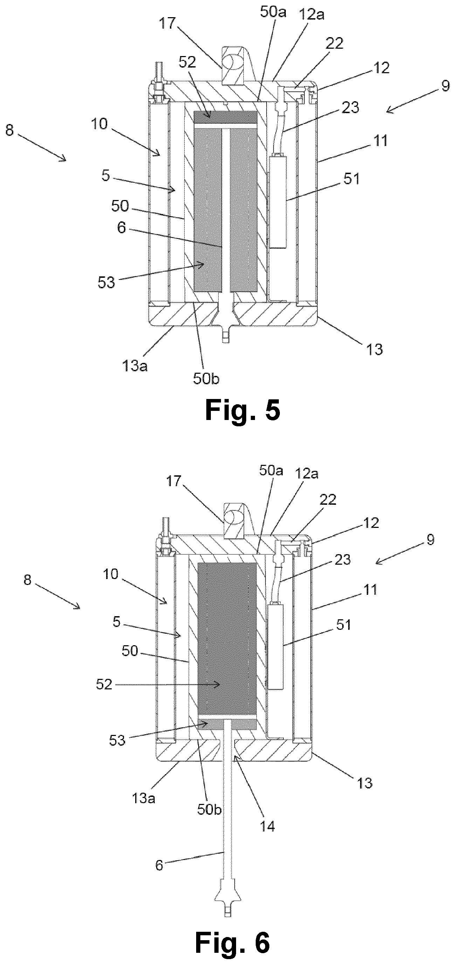

As shown in figures 5 and 6, the actuator is a pneumatic cylinder 5 comprising a piston 6 which is attached to the discharge valve 4 by means of a cord or cable 7, shown in figures 1 and 2, and the fastening means comprise a support 8 comprising a case 9, the case 9 comprising inside the pneumatic cylinder 5 and a pressurised air chamber 10 for the pneumatic cylinder 5. Figures 3 to 8 show the support 8 of the embodiment of figures 1 and 2.

Since, as shown in figures 1 and 2, a device 1 with a simple and compact actuator is provided in this way, which occupies a small volume and is housed in the case 9 of the support 8, the device 1 can be stowed without any problems in the cargo basket 30 of the helicopter 2, since the bucket 3 is usually made of a textile material. Thus, when the helicopter 2 is far away from the point of fire, it is not necessary to transport the device 1 suspended from the helicopter 2 during the journey, as shown in figure 1, but it is transported in the cargo basket 30 of the helicopter 2. This allows helicopter 2 to travel at a higher speed, to consume less fuel and to avoid the added risk of flying with the empty device 1 suspended from helicopter 2.

The pneumatic cylinder 5 comprises a solenoid valve 51, shown in figures 4 to 7, configured to be actuated from the helicopter 2, either via a cable or wirelessly. The pneumatic cylinder 5 comprises, as shown in figures 5 and 6, a first chamber 52 and a second chamber 53, and the solenoid valve 51 is communicated with said first chamber 52 and said second chamber 53 by means of a flexible tube 54 and a flexible tube 55 respectively, as shown in figure 4, in which the wall 11 has been removed to show the inside of the case 9 of the support 8.

In a preferred embodiment, as shown in figures 1 and 2, the fastening means comprise ropes, cables or straps 20 by means of which the bucket 3 is suspended from the support 8.

As shown in figure 3, in this embodiment the case 9 of the support 8 is a cylindrical body comprising a perimeter side wall 11, a top wall 12 and a bottom wall 13, although it could also be a prismatic body with, for example, a hexagonal base. As shown in figures 5 and 6, the walls 11, 12 and 13 delimit an inner space in which the pneumatic cylinder 5 is arranged vertically. The lower wall 13 of the case 9 comprises a through hole 14 so that the piston 6 of the pneumatic cylinder 5 can protrude from the case 9.

In a preferred embodiment, the pressurised air chamber 10 at least partially encloses the pneumatic cylinder 5, which contributes to the compactness of the case 9 of the support 8. Preferably, the side wall 11 of the case 9 houses the pressurised air chamber 10.

In the embodiment shown in the figures, the side wall 11 of the case 9 is a hollow wall and encloses inside the pressurised air chamber 10, as shown in figures 5 and 6.

In a preferred embodiment, as shown in figures 5 and 6, the upper wall 12 comprises a duct 22 communicating the pressurised air chamber 10 with the pneumatic cylinder 5. More specifically, the duct 22 communicates the pressurised air chamber 10 with the solenoid valve 51 of the pneumatic cylinder 5. This conduit 22 includes an outlet port connected to the interior space delimited by walls 11, 12 and 13, which is connected to the solenoid valve 51 by means of a flexible tube 23. This contributes to making the solution more robust, because the pressurised air chamber 10 communicates with the pneumatic cylinder 5 not through the hollow wall 11, but through the upper wall 12.

In an alternative embodiment, not shown in the figures, the pressurised air chamber 10 is delimited by the walls 11, 12 and 13 of the case 9 and the pneumatic cylinder 5, so the wall 11 is not hollow.

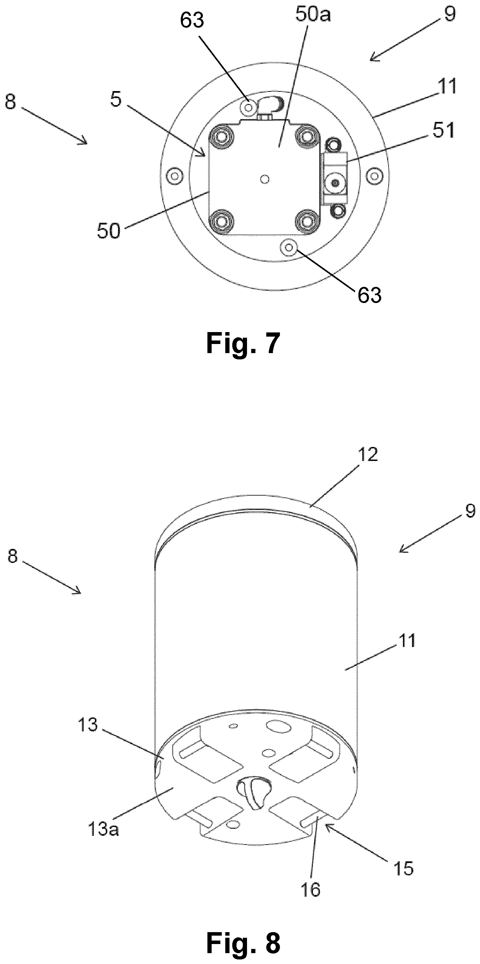

In a preferred embodiment, the pneumatic cylinder 5 comprises a prismatic or cylindrical main body 50 delimited by a first face 50a and a second face 50b, the plunger 6 being housed in the main body 50 such that it protrudes from the second face 50b of the main body 50. In the embodiment shown in the figures, as shown in figure 7, the main body 50 of the pneumatic cylinder 5 is prismatic, more precisely it has a square base with rounded edges. In the device 1 of the invention, commercial pneumatic cylinders 5 having these characteristics can be used.

In order to make the support 8 compact and to maximize the function of the pneumatic cylinder 5 as a structural part of the support 8, in a preferred embodiment the first face 50a of the main body 50 is attached to the top wall 12 of the case 9, and the second face 50b of the main body 50 is attached to the bottom wall 13 of the case 9. This is shown in figures 4, 5 and 6.

In a preferred embodiment, the top wall 12 of the case 9 is a top cover attached to the side wall 11, the top wall 12 being bolted to the main body 50 of the pneumatic cylinder 5. Figure 7, in which the top wall 12 has been removed to show the inside of the case 9 of the support 8, shows that in the embodiment shown in the figures the top wall 12 is bolted to the main body 50 of the pneumatic cylinder 5 by means of four bolts.

Similarly, in a preferred embodiment, the bottom wall 13 of the case 9 is a bottom cover coupled to the side wall 11, said bottom wall 13 being bolted to the main body 50 of the pneumatic cylinder 5.

In a preferred embodiment, the support 8 comprises a plurality of columns 63, preferably two, connecting the upper wall 12 and the lower wall 13. These columns 63 are structural elements that are preferably fixed to the upper wall 12 and the lower wall 13 by means of bolts.

As shown in figure 8, in a preferred embodiment the bottom wall 13 of the case 9 comprises a bottom face with a plurality of housings 15 with a respective fastening pin 16 for fastening ropes, cables or straps 20. In the embodiment shown in the figures, the bottom face of the bottom wall 13 comprises four equally distributed housings 15.

As shown in figures 3 to 6, in a preferred embodiment the upper wall 12 of the case 9 comprises an upper face 12a with a vertical lashing plate 17 with a hole 18 for suspending the support 8 from the helicopter 2. In figure 1 the support 8 is suspended from the helicopter 2 by means of a rope or sling 19, but it could be suspended directly from the helicopter 2 by means of a shackle.

The device 1 of the invention also comprises an air compressor communicated with the pressurised air chamber 10. In the embodiment shown in figures 1 to 8, the air compressor is communicated with the pressurised air chamber 10 by means of an air pipe 56 and is arranged inside the helicopter 2, therefore it is not shown in the figures.

In an alternative embodiment of the device 1 of the invention, not shown in the figures, the air compressor is suspended from the helicopter 2 and the case 9 is in turn suspended from the air compressor by means of a rope or sling.

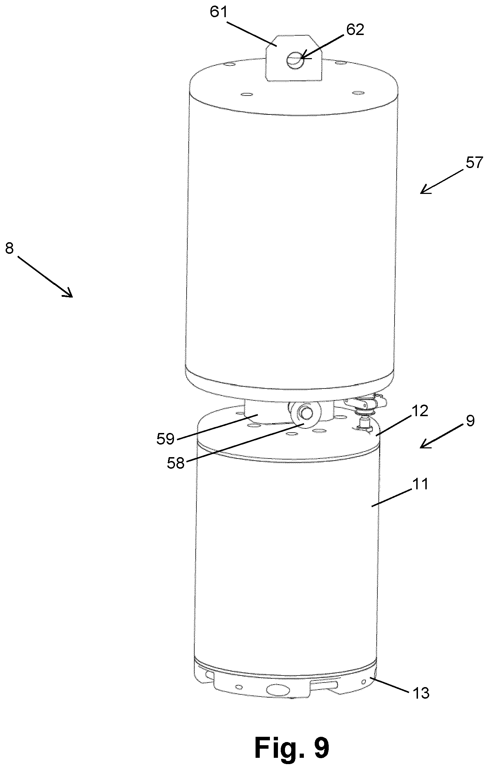

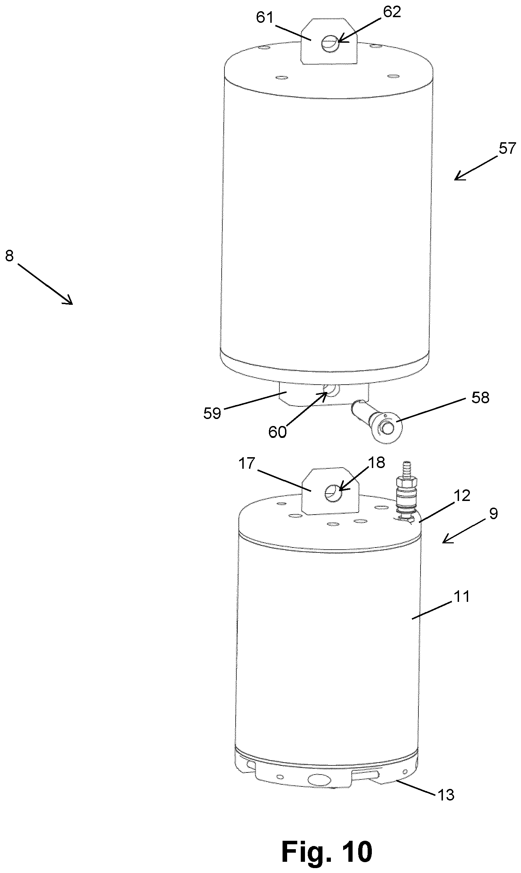

As shown in figures 9 and 10, in another alternative embodiment of the device 1 of the invention it is the support 8 which comprises the air compressor 57. Preferably, the air compressor 57 is coupled to the upper wall 12 of the case 9. Preferably, the connection of the air compressor 57 with the upper wall 12 of the case 9 is carried out by means of a pin 58. In the embodiment shown in figures 9 and 10, the air compressor 57 comprises an extension 59 with a housing into which the vertical plate 17 of the upper wall 12 of the case 9 is inserted. Said extension 59 comprises a through hole 60, the vertical plate 17 being fixed to the extension 59 by means of the pin 58 passing through the hole 18 of the vertical plate 17 and the hole 60 of the extension 59. On the other hand, preferably the air compressor 57 comprises a vertical plate 61 with a hole 62 for suspending the support 8 from the helicopter 2.

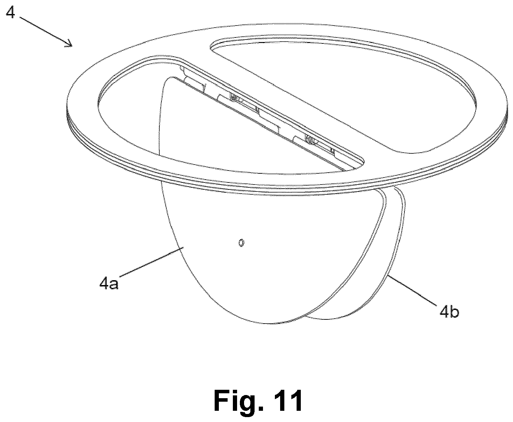

In a preferred embodiment, as shown in figure 11 the discharge valve 4 is a flap valve which opens downwards. This discharge valve 4 comprises flaps 4a and 4b which are attached to one end of the plunger 6 of the pneumatic cylinder 5 by means of the cord or cable 7. In this way, the plunger 6 comprises a closed position in which the discharge valve 4 is closed, which is the position shown in figure 5, and open positions in which the plunger 6 moves downwards and the discharge valve 4 opens. Figure 6 shows the position of the plunger 6 corresponding to a maximum opening position of the discharge valve 4. Figure 11, in which the rope or cable 7 is not shown, shows the discharge valve 4 in the maximum opening position.

## Claims

1. Fire fighting device configured to be transported by a helicopter, comprising
a bucket (3) configured to hold a fluid inside, the bucket (3) comprising a top opening (3a) and a bottom opening (3b),
fastening means for suspending the bucket (3) from the helicopter (2),
a discharge valve (4) attached to the bottom opening (3b) of the bucket (3) for emptying the fluid from the bucket (3), and
an actuator configured to open and close the discharge valve (4),
**characterised in that** the actuator is a pneumatic cylinder (5) comprising a piston (6) connected to the discharge valve (4) by means of a rope or cable (7), and the fastening means comprise a support (8) comprising a case (9), the case (9) comprising inside the pneumatic cylinder (5) and a pressurised air chamber (10) for the pneumatic cylinder (5).

2. Device according to claim 1, wherein the fastening means comprise ropes, cables or straps (20) by means of which the bucket (3) is suspended from the support (8).

3. Device according to claim 1 or 2, wherein the case (9) of the support (8) is a cylindrical or prismatic body comprising a perimeter side wall (11), an upper wall (12) and a lower wall (13), said walls (11, 12, 13) delimiting an inner space in which the pneumatic cylinder (5) is vertically arranged, the lower wall (13) of the case (9) comprising a hole (14) through which the piston (6) of the pneumatic cylinder (5) can protrude from the case (9).

4. Device according to claim 3, wherein the pressurised air chamber (10) at least partially encloses the pneumatic cylinder (5).

5. Device according to claim 4, wherein the side wall (11) of the case (9) houses the pressurised air chamber (10), the side wall (11) of the case (9) preferably being a hollow wall that encloses the pressurised air chamber (10).

6. Device according to claim 5, wherein the upper wall (12) comprises a duct (22) connecting the pressurised air chamber (10) with the pneumatic cylinder (5).

7. Device according to claim 4, wherein the pressurised air chamber (10) is delimited by the walls (11, 12, 13) of the case (9) and the pneumatic cylinder (5).

8. Device according to any of claims 3 to 7, wherein the pneumatic cylinder (5) comprises a prismatic or cylindrical main body (50) delimited by a first face (50a) and a second face (50b), the plunger (6) being housed in the main body (50) such that it protrudes from the second face (50b) of the main body (50), the first face (50a) of the main body (50) being attached to the top wall (12) of the case (9), and the second face (50b) of the main body (50) being attached to the bottom wall (13) of the case (9).

9. Device according to claim 8, wherein the top wall (12) of the case (9) is a top cover attached to the side wall (11), said top wall (12) being bolted to the main body (50) of the pneumatic cylinder (5), and/or the bottom wall (13) of the case (9) is a bottom cover attached to the side wall (11), said bottom wall (13) being bolted to the main body (50) of the pneumatic cylinder (5).

10. Device according to any of claims 3 to 9, wherein the bottom wall (13) of the case (9) comprises a bottom face with a plurality of housings (15) with a respective fastening pin (16) for fastening ropes, cables or bands (20), preferably comprising four equally distributed housings (15).

11. Device according to any of claims 3 to 10, wherein the upper wall (12) of the case (9) comprises an upper face (12a) with a vertical lashing plate (17) with a hole (18) for suspending the case (9) from the helicopter (2) by means of a rope or sling (19), or by means of a shackle.

12. Device according to any of the preceding claims, wherein the pneumatic cylinder (5) comprises a solenoid valve (51) configured to be actuated from the helicopter (2).

13. Device according to any of the preceding claims, comprising an air compressor connected to the pressurised air chamber (10) by means of an air tube (56).

14. Device according to any one of claims 1 to 12, wherein the support (8) comprises an air compressor (57) coupled to the case (9).

15. Device according to any of the preceding claims, wherein the discharge valve (4) is a flap valve which opens downwards, the flaps (4a, 4b) of the valve (4) being attached to one end of the plunger (6) of the pneumatic cylinder (5) by means of the cord or cable (7), so that the plunger (6) comprises a closed position in which the discharge valve (4) is closed, and open positions in which the plunger (6) moves downwards and the discharge valve (4) opens.
